Europäisches Patentamt

(19) European Patent Office    (11) Publication number: **0 282 144**
Office européen des brevets                    **B1**

(12) # EUROPEAN PATENT SPECIFICATION

(45) Date of publication of the patent specification:    (51) Int. Cl.⁵: **B60G 15/06, F16F 9/54**
    **27.06.90**

(21) Application number: **88300089.5**

(22) Date of filing: **07.01.88**

(54) Quick-connect strut mount.

(30) Priority: **02.02.87 US 9954**

(43) Date of publication of application:
    **14.09.88 Bulletin 88/37**

(45) Publication of the grant of the patent:
    **27.06.90 Bulletin 90/26**

(84) Designated Contracting States:
    **DE ES FR GB**

(56) References cited:
    **EP-A- 0 026 131**
    **DE-A- 3 620 774**
    **US-A- 2 927 786**

(73) Proprietor: **SATURN CORPORATION (a Delaware corp.),**
    **1400 Stephenson Highway P.O. Box 7025, Troy**
    **Michigan 48007-7025(US)**

(72) Inventor: **Pinch, William Dewitt, 25111 Marshall,**
    **Dearborn.Michigan 48124(US)**
    Inventor: **Dolengowski, Douglas Anthony,**
    **1877 Woodgate, Troy Michigan 48083(US)**

(74) Representative: **Haines, Arthur Donald et al, Patent**
    **Section (F6) Vauxhall Motors Limited P.O.**
    **Box 3 Kimpton Road, Luton, Beds. LU2 0SY(GB)**

ACTORUM AG

**Description**

This invention relates to a quick-connect strut mount for a suspension strut operatively connecting a road wheel of a vehicle to support structure of the vehicle as specified in the preamble of claim 1, for example as disclosed in US-A 2 927 786.

The invention is particularly concerned with the provision of a new and improved strut mount providing for optimised mechanical and time-efficient connection of such a strut to the support structure while effectively isolating the strut from the vehicle body.

The invention also relates to a new and improved method of coupling a suspension strut to support structure with a quick-connect mount installed using a generally linearly directed installation force from a position generally below the support structure.

A quick-connect strut mount for operatively connecting a suspension strut to support structure in a vehicle according to the present invention is characterised by the features specified in the characterising portion of claim 1.

In a preferred embodiment of a quick-connect strut mount in accordance with the present invention, support structure in a mounting tower of a vehicle body is formed with a truncated conical opening. The strut mount assembly comprises a resilient body of a rubber material secured by means of a centralised metallic sleeve to a piston rod of a strut for isolating the strut from the vehicle body. The body of the mount has an upper surface which corresponds to the support structure, including a truncated coned portion to fit into the opening in the support structure. This coned portion carries a resilient snap ring retainer that is trapped in a horizontal groove therein. The suspension strut and the mount are moved in a generally vertical direction from a position generally below the vehicle so that the snap ring is progressively squeezed in a radially inward direction by the decreasing diameter of the conical wall of the support structure. When the snap ring clears the top of the conical wall, it recovers to its normal diameter, which is greater than the diameter of the upper end of the conical wall, such that the snap ring thereby quickly and precisely locks the strut in an installed position. The mount and strut are vertically trapped, and the rubber is preloaded in a mated position by the snap ring and by the engagement of an annular flange of the body of the mount with the lower surface of the support structure provided by a mounting plate. Arcuately spaced preloading ribs are provided on the upper surface of the main body of the mount, to optimise the preload for mount durability.

In the drawing:

Figure 1 is an exploded view of a suspension strut, a preferred embodiment of a strut mount in accordance with the present invention, and support structure in a vehicle;

Figure 2 is a fragmentary longitudinal sectional view, with parts in elevation, illustrating a portion of the strut mount shown in Figure 1 and a mounting tower of the vehicle, illustrating a first stage in the joining together of these parts;

Figure 3 is a fragmentary longitudinal view similar to that shown in Figure 2, but showing the relative positions of the strut mount and the mounting tower just prior to locking engagement; and

Figure 4 is a fragmentary longitudinal view similar to the views of Figures 2 and 3, but showing the strut mount in locking engagement with the mounting tower of the vehicle.

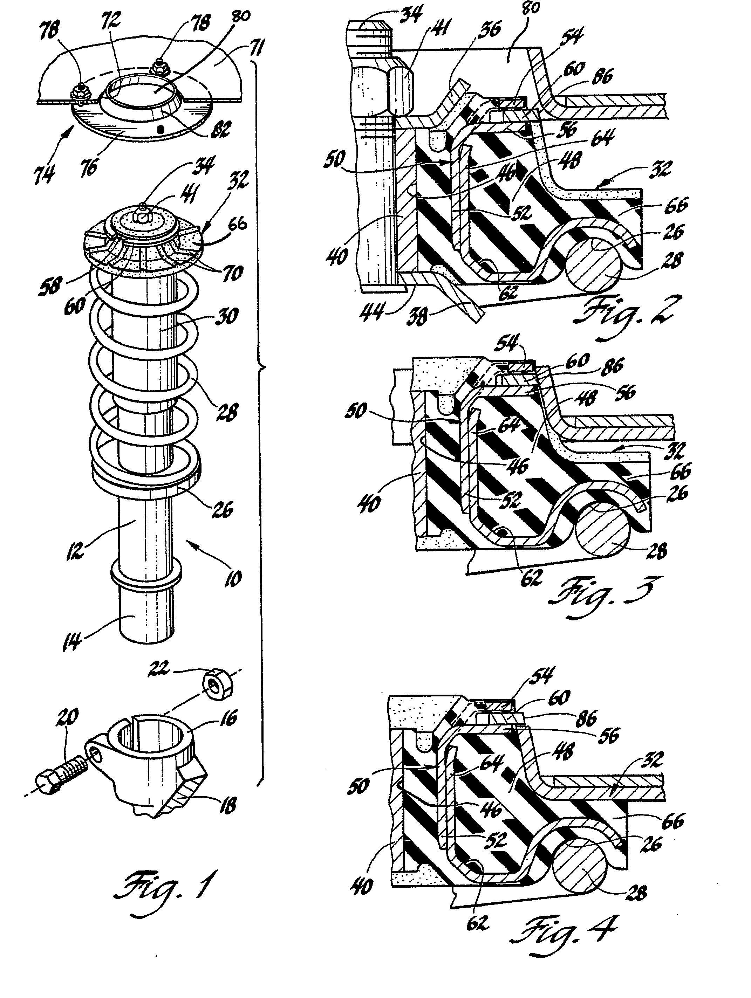

With reference now to the drawing, Figure 1 shows a telescopic suspension strut 10 having an outer support tube 12 with a lower end 14 adapted to be received in a mounting cup 16 of a road wheel assembly 18. Conventional bolt and nut means 20, 22 are employed to secure the suspension strut 10 to the mounting cup 16. The suspension strut 10 is a conventional strut that may be of the wet-build or cartridge type such as is disclosed in US–A 4 276 971.

The suspension strut 10, which is shown in Figure 1 in an extended position, has a lower spring seat 26 secured to the outer support tube 12 by any suitable means, including bearing means which would allow rotary movement of the strut relative to the spring seat if the road wheel were a steerable road wheel. Seated on the lower spring seat 26 is a helical suspension spring 28 that is disposed around the upper portion of the strut, and a conventional dust tube (stone guard) 30 which terminates in seating engagement with an annular upper mount assembly 32. The suspension strut 10 can have a jounce bumper of any suitable construction, but such is not shown for clarity, and forms no part of the present invention.

The upper mount assembly 32 is attached to the reduced-duameter upper end of a piston rod 34 of the suspension strut 10 by means of top and bottom washers 36 and 38, and a nut 41 that is threaded on to the end of the piston rod into tight engagement with the top washer 36.

The upper mount assembly 32 has at its core a cylindrical metal bushing 40 which has an outer peripheral wall blonded to the inner wall 46 of an annular body 48 of a suitable rubber which, through its resiliency, isolates the strut and the suspension spring from the body of the vehicle. More particularly, the mount is designed to isolate the suspension spring from the vehicle body with a high spring rate by compression loading, whereas the piston rod, which is velocity-sensitive, is isolated from the vehicle body with a low spring rate since the central portion of the mount is worked in shear by the piston rod 34.

Moulded within the rubber body 48 is a snap ring retainer 50 having a main cylindrical wall 52 and also having two series of radially extending flange segments 54 and 56 that are vertically spaced and alternate to form an annular groove 58 effective to receive and retain a flat metallic snap ring 60 having terminal ends facing one another, as best seen in Figure 1.

In addition to the snap ring retainer 50, the rubber body 48 of the upper mount assembly 32 also has moulded therein an annular metallic suspension spring seat 62 which has a cylindrical wall 64 that may be fastened to the adjacent wall 52 of the snap ring retainer, or alternatively may be separate therefrom. The lower end of the spring seat is flanged to extend radially outwardly almost to the extent of the enveloping flange 66 of the annular rubber body 48, and has an annular concave configuration which accommodates the top coil of the suspension spring 28, as shown in Figures 2 to 4.

The rubber body 48 of the upper mount assembly 32 has a series of arcuately spaced and radially extending preloading ribs 70 that are formed on the upper surface thereof and, in the installed position, improve the loading of the rubber, to increase the service life of the mount.

The present invention provides for optimised "snap-on" connection of the suspension strut 10 to the vehicle body 71. To this end, the mounting tower of the vehicle body 71 is formed with a circular opening 72 therein. An annular reinforcing mounting plate 74 having a circular flange 76 is fastened to the mounting tower by the use of threaded fastener means 78 shown in Figure 1. The mounting tower could be so formed as to allow the mounting plate to be eliminated, if desired. In any event, the mounting plate 74 has a coned central opening 80 defined by an upwardly extending wall 82 the diameter of which decreases with height, as illustrated. The interior surface of the upwardly extending wall 82 provides a camming surface for radially constricting the snap ring 60, the outer peripheral edge 86 of which is tapered to facilitate installation, as best seen in Figures 2 and 3.

In Figure 2, the suspension strut 10 is shown being raised towards a position of connection to the mounting tower, and the snap ring 60 is just below the mounting plate 74. Figure 3 illustrates the snap ring being constricted by the coned (tapered) inner wall of the central portion of the mounting plate 74. As the suspension strut 10 is raised, the installation force applied by the installer or the installation equipment constricts the snap ring 60, such that it can thereby pass through the central opening. In Figure 4, the snap ring 60 has been moved to a position over the top of the mounting plate cone, so that the snap ring can spring radially outwardly in recovery to its original shape, to quickly connect or lock the strut to the vehicle body. In this position, the top of the flange 66 of the rubber body 48 engages the bottom surface of the flange 76. The rubber of the mount is preloaded by the ribs 70, so that deflection involves only loaded rubber material, to increase durability.

The strut mount in accordance with the present invention provides a dual spring rate, with the flange 66 of the resilient annular body 48 of the mount being loaded by the suspension spring 28 in compression for high spring rate isolation, whereas the shock absorber (damper) works the rubber body in shear for a low spring rate for this velocity-sensitive element of the suspension.

The strut mount in accordance with the present invention further facilitates removal of the suspension strut 10 as a unit from the vehicle body. For such removal, the snap ring 60 is constricted from the position shown in Figure 4 and the strut is moved vertically downwardly into, successively, the position shown in Figure 3 and the position shown in Figure 2, in that order. The strut can then be inspected, repaired or replaced, as required.

By the use of the quick-connect strut mount in accordance with the present invention which has been particularly described, it is possible to avoid the need for the plate-like retainer member 74 that is utilised in US-A-4 175 771, because in the present strut mount the mounting tower, in conjunction with the annular reinforcing mounting plate, serves as the connection for the snap ring 60. In the present strut mount, also, the radially extending ribs 70 provide the preload that is desirable for increasing the spring rate and reducing flexing of the rubber of the resilient annular body 48.

## Claims

1. A quick-connect strut mount for operatively connecting a suspension strut (10) to support structure (71) in a vehicle, and including isolator means (48) operatively connected to the upper end of the suspension strut, an opening (80) defined by inwardly inclined camming means (82), and constrictable and resilient retainer means (60) arranged to be trapped by the resilient isolator means (48), characterised in that said retainer means (60) is constrictable by the camming means (82) in response to the insertion of the isolator means (48), within the opening (80) from only one end thereof, and thereupon to be naturally expandable to a predetermined expanded and locking state on reaching a predetermined position above the end of the camming means (82), to thereby lock the suspension strut (10) in position with respect to the support structure (71).

2. A quick-connect strut mount according to claim 1, characterised in that the camming means is formed by conical wall means (82) having an upper surface, and that the isolator means (48) has an outwardly extending flange means (66) which, as the retainer means (60) engages the upper end of the conical wall means (82), engages the lower surface of the mount (32), to lock the mount (32) to the support structure (71).

3. A quick-connect strut mount according to claim 2, characterised in that the flange means (66) of the isolator means (48) has preload means (70) thereon which engages the under surface of the mount (32) for preloading the resilient isolator means (48).

4. A quick-connect strut mount according to claim 3, characterised in that the preload means comprises a series of ribs (70) disposed on the upper surface of the isolator means (48) for engagement with the inner wall of the conical wall means (82) and the bottom surface thereof for preloading the resilient isolator means (48) when in the said position.

5. A quick-connect strut mount according to any one of claims 1 to 4, characterised in that the constrictable and resilient retainer means comprises a flat metallic snap ring (60).

6. A method of operatively connecting a suspension strut to support structure in a vehicle, comprising the steps of:
providing detent means (60) in a strut mount (32);
attaching the strut mount (32) to an upper portion of a strut (10);
inserting the strut mount (32) through an opening in the support structure (71);
constricting the detent means (60); and
allowing the detent means (60), when in a predetermined position, to recover naturally from its constricted condition into co-operation with keeper means (82), to thereby retain the strut (10) to the support structure (71).

7. A method according to claim 6, characterised in that the detent means comprises radially movable connector means (60), the constriction of the radially movable connector means (60) is effected by the support structure (71), and in the recovery step the connector means (60) is allowed to expand naturally from its constricted condition into an expanded state and into co-operation with the support structure (71).

8. A method according to claim 6 or 7, characterised in that the detent means comprises a flat metallic snap ring (60).

## Patentansprüche

1. Schnellverbindungs-Stützenbefestigung zum wirksamen Verbinden eines Federbeins (10) mit Stützaufbau (21) bei einem Fahrzeug, die enthält wirksam mit dem oberen Ende des Federbeins verbundenes Isolatormittel (48), eine durch nach innen geneigtes Ansatzmittel (82) definierte Öffnung (80) und zusammendrückbares und elastisches Rückhaltemittel (60), das ausgelegt ist, durch die elastischen Isolatormittel (48) eingefangen zu werden, dadurch gekennzeichnet, daß das Rückhaltemittel (60) durch das Ansatzmittel (82) in Reaktion auf das Einsetzen des Isolatormittels (48) innerhalb der Öffnung (80) nur von einem Ende derselben zusammendrückbar ist und daraufhin in natürlicher Weise zu einem vorbestimmten gedehnten und sperrenden Zustand ausdehnbar bei Erreichen einer vorbestimmten Lage über dem Ende des Ansatzmittels (82), um dadurch das Federbein (10) bezüglich der Stützstruktur (71) in richtiger Stellung zu verriegeln.

2. Schnellverbindungs-Stützenbefestigung nach Anspruch 1, dadurch gekennzeichnet, daß das Ansatzmittel durch ein konisches Wandmittel (82) mit einer oberen Fläche gebildet ist, und daß das Isolatormittel (48) ein sich nach außen erstreckendes Flanschmittel (66) besitzt, welches bei Eingriff des Rückhaltemittels (60) mit dem oberen Ende des konischen Wandmittels (82) mit der unteren Fläche der Befestigung (32) in Eingriff kommt, um die Befestigung (32) mit dem Stützaufbau (71) zu verriegeln.

3. Schnellverbindungs-Stützenbefestigung nach Anspruch 2, dadurch gekennzeichnet, daß das Flanschmittel (66) des Isolatormittels (48) Vorlastmittel (70) an sich hat, welches mit der Unterfläche der Befestigung (32) in Eingriff tritt, um das elastische Isolatormittel (48) unter Vorbelastung zu setzen.

4. Schnellverbindungs-Stützenbefestigung nach Anspruch 3, dadurch gekennzeichnet, daß das Vorlastmittel eine Reihe von an der oberen Fläche des Isolatormittels (48) angeordnete Rippen (70) zum Eingriff mit der Innenwand des konischen Wandmittels (82) und der Bodenfläche desselben umfaßt, um das in der genannten Stellung befindliche elastische Isolatormittel unter Vorbelastung zu setzen.

5. Schnellverbindungs-Stützenbefestigung nach einem der Ansprüche 1 bis 4, dadurch gekennzeichnet, daß das zusammendrückbare und elastische Rückhaltemittel einen flachen metallischen Schnappring (60) umfaßt.

6. Verfahren zum wirksamen Verbinden eines Federbeins mit Abstützstruktur in einem Fahrzeug, mit den Schritten:
es werden Einrastmittel (60) in einer Stützenbefestigung (32) vorgesehen;
die Stützenbefestigung (32) wird an einem oberen Abschnitt einer Stütze (10) angebracht:
die Stützenbefestigung (32) wird durch eine Öffnung in dem Stützaufbau (71) eingesetzt;
das Rastmittel (60) wird zusammengedrückt und es wird zugelassen, daß das Rastmittel (60), wenn es in einer vorbestimmten Lage ist, sich in natürlicher Weise von seinem zusammengedrückten Zustand in Zusammenwirkung mit Haltermitteln (82) erholt, um dadurch die Stütze (10) an dem Stützaufbau (71) zurückzuhalten.

7. Verfahren nach Anspruch 6, dadurch gekennzeichnet, daß das Rastmittel ein radial bewegliches Verbindermittel (60) umfaßt, wobei das Zusammendrücken des radial bewegbaren Verbindermittels (60) durch den Stützaufbau (71) bewirkt wird, und daß in dem Erholungsschritt zugelassen wird, daß sich das Verbindermittel (60) von seinem zusammengedrückten Zustand in natürlicher Weise in einen gedehnten Zustand und in Zusammenwirken mit dem Stützaufbau dehnt.

8. Verfahren nach Anspruch 6 oder 7, dadurch gekennzeichnet, daß das Rastmittel einen flachen metallischen Schnappring (60) umfaßt.

## Revendications

1. Fixation de jambe de suspension à accouplement rapide pour assembler fonctionnellement une jambe de suspension (10) à une structure support (71) dans un véhicule, comprenant des moyens isolants (48) liés fonctionnellement à l'éxtrémité supérieure de la jambe de suspension, une ouverture (80) définie par des moyens à effet de came (82) inclinés vers l'intérieur, et des moyens de retenue (60) contractables et élastiques, agencés pour être retenus par les moyens isolants élastiques (48), caractérisée en ce que lesdits moyens de retenue (60) peuvent être contractés par les moyens à effet de came (82) lorsqu'on insère les moyens isolants (48) dans l'ouverture (80), par une seule extrémité de cette ouverture, et peuvent ensuite se dilater spontanément pour prendre un état d'extension et de verrouillage prédéterminé lorsqu'ils atteignent une position prédéterminée au-dessus de l'extrémité des moyens à effet de came (82), pour verrouiller ainsi la jambe de suspension (10) en position par rapport à la structure support (71).

2. Fixation de jambe de suspension à accouplement rapide selon la revendication 1, caractérisée en ce que les moyens à effet de came sont formés par des moyens formant une paroi conique (82) possédant une surface supérieure et que les moyens isolants (48) possèdent des moyens (66) formant une collerette qui s'étend vers l'extérieur, et qui, au moment où les moyens de retenue (60) sont en appui sur l'extrémité supérieure des moyens formant une paroi conique (82), entrent en contact avec la surface inférieure de la fixation (32) pour verrouiller la fixation (32) par rapport à la structure support (71).

3. Fixation de jambe de suspension à accouplement rapide selon la revendication 2, caractérisée en ce que les moyens formant collerette (66) des moyens isolants (48) portent des moyens de précontrainte (70) qui s'appuient contre la surface inférieure de la fixation (32) pour précontraindre les moyens isolants élastiques (48).

4. Fixation de jambe de suspension à accouplement rapide selon la revendication 3, caractérisée en ce que les moyens de précontrainte comprennent une série de côtes (70) disposées sur la surface supérieure des moyens isolants (48) pour entrer en appui contre la paroi inférieure des moyens formant une paroi conique (82) et contre la surface inférieure de ces moyens pour imposer une précontrainte au moyens isolants élastiques (48) lorsqu'ils se trouvent dans ladite position.

5. Fixation de jambe de suspension à accouplement rapide selon une quelconque des revendications 1 à 4, caractérisée en ce que les moyens de retenue contractables et élastiques comprennent une bague d'encliquetage métallique plate (80).

6. Procédé pour assembler fonctionnellement une jambe de suspension à une structure support dans un véhicule, comprenant les phases consistant à:
    prévoir des moyens d'encliquetage (60) dans une fixation de jambe de suspension (32);
    fixer la fixation (32) à la partie supérieure d'une jambe de suspension (10);
    insérer la fixation (32) de la jambe de suspension à travers une ouverture ménagée dans la structure support (71);
    contracter les moyens d'encliquetage (60); et laisser les moyens d'encliquetage (60) reprendre naturellement, lorsqu'ils se trouvent dans une position prédéterminée, un état de coopération avec des moyens formant organe de retenue (82), à partir de leur état contracté, pour retenir ainsi la jambe de suspension (10) contre la structure support (71).

7. Procédé selon la revendication 6, caractérisé en ce que les moyens d'encliquetage comprennent des moyens d'assemblage (60) mobiles dans la direction radiale, la contraction des moyens d'assemblage (60) mobiles dans la direction radiale est assurée par la structure support (71), et, dans la phase de reprise, les moyens d'assemblage (60) sont autorisés à se dilater naturellement pour passer de leur état contracté à un état d'expansion et à se placer en position de coopération avec la structure support (71).

8. Procédé selon la revendication 6 ou 7, caractérisé en ce que les moyens d'encliquetage comprennent une bague d'encliquetage métallique plate (80).

Fig. 1

Fig. 2

Fig. 3

Fig. 4